# EUROPEAN PATENT APPLICATION

(11) **EP 3 395 846 A1**
(43) Date of publication of application: **31.10.2018**
(21) Application number: 16878138.3
(22) Date of filing: 27.10.2016
(51) Int. Cl.: C08G 18/32, C08L 101/00, D01F 6/70

(54) **THERMAL RESPONSIVE MATERIAL, AND THERMAL CONTROL DEVICE AND FIBER USING THERMAL RESPONSIVE MATERIAL**

(30) Priority: 24.12.2015 JP 2015252361; 24.12.2015 JP 2015252362
(71) Applicant: TOYO TIRE & RUBBER CO., LTD., Itami-shi Hyogo 664-0847 (JP)
(72) Inventor: ISEKI, Seiji, Hyogo 6640847 (JP); HIDAKA, Yuki, Hyogo 6640847 (JP)
(74) Representative: Cabinet Beau de Loménie
(86) International application number: PCT/JP2016/081846
(87) International publication number: WO 2017/110240

(57) **Abstract**

The present invention focuses on a change in elastic modulus or rupture stress of a liquid crystalline polymer that occurs when the liquid crystalline polymer undergoes phase transition from a liquid crystalline phase to an isotropic phase in response to a change in temperature. Provided is a thermoresponsive material that has at least a predetermined strength (durability), and excellent responsiveness. The thermoresponsive material comprises a liquid crystalline polymer that reversibly transitions between a liquid crystalline phase and an isotropic phase, in response to a change in temperature, the liquid crystalline polymer serving as a matrix. Satisfied is E₁/E₂ ≤ 1000, where E₁ represents the elastic modulus of the matrix when the matrix includes the liquid crystalline phase, and E₂ represents the elastic modulus of the matrix when the matrix includes the isotropic phase. Satisfied is σ₁/σ₂ ≤ 40, where σ₁ represents the rupture stress of the matrix when the matrix includes the liquid crystalline phase, and σ₂ represents the rupture stress of the matrix when the matrix includes the isotropic phase.

## Description

### TECHNICAL FIELD

The present invention relates to a thermoresponsive material comprising, as a matrix, a liquid crystalline polymer that reversibly transitions between a liquid crystalline phase and an isotropic phase, in response to a change in temperature, and a heat control device and fiber using the thermoresponsive material.

### BACKGROUND ART

Liquid crystalline polymers, which have mesogen groups in their molecular structure, change their physical properties, depending on a change in the degree of alignment of the liquid crystal (mesogen groups). Attention has been focused on such nature, and attempts have been made to use liquid crystalline polymers in various applications.

For example, a technique has been disclosed in which a liquid crystal layer containing a liquid crystal elastomer, which is a type of liquid crystalline polymer, is sandwiched between a pair of electrodes, and the resultant structure is used as an actuator for a vehicle (see, for example, Patent Document 1). In the case of the liquid crystal elastomer actuator of Patent Document 1, the liquid crystal layer is obtained by impregnating the liquid crystal elastomer with low-molecular-weight liquid crystal, and the relationship between the uneven shape of an electrode surface in contact with the liquid crystal layer and the size of the low-molecular-weight liquid crystal contained in the liquid crystal layer is adjusted to optimize the aligned state of the low-molecular-weight liquid crystal, thereby improving the responsiveness of the low-molecular-weight liquid crystal to an electric field.

### CITATION LIST

### PATENT LITERATURE

Patent Document 1: Japanese Unexamined Patent Application Publication No. 2010-17066

### SUMMARY OF INVENTION

### TECHNICAL PROBLEM

A liquid crystal elastomer that can be practically used in industrial products is required to change its dynamic physical properties or displacement amount greatly in response to a change in temperature or the like of an external environment while maintaining at least a predetermined strength (durability).

In this regard, in the liquid crystal elastomer actuator of Patent Document 1, by applying an electric field between the electrodes, the low-molecular-weight liquid crystal contained in the liquid crystal elastomer is aligned in the direction of the electric field, which triggers and facilitates the movement of the liquid crystal (mesogen groups) contained in the liquid crystal elastomer. In other words, in the liquid crystal elastomer actuator of Patent Document 1, the aligned state of the liquid crystal (mesogen groups) contained in the liquid crystal elastomer depends on the aligned state of the low-molecular-weight liquid crystal to which an electric field is applied, and does not actively change. Therefore, the liquid crystal elastomer actuator of Patent Document 1, which contains only the liquid crystal elastomer serving as the matrix, has difficulty in greatly changing its dynamic physical properties or displacement amount in response to a change in temperature to obtain good responsiveness.

In the liquid crystal elastomer actuator of Patent Document 1, in order to cause the low-molecular-weight liquid crystal to serve as the trigger, the liquid crystal elastomer as the matrix needs to have predetermined flexibility (i.e., the ability of the molecular chain to easily undergo structural relaxation). Therefore, when the liquid crystal elastomer actuator of Patent Document 1 is used, a liquid crystal elastomer having a low elastic modulus may need to be selected as the matrix, or the liquid crystal elastomer actuator may need to be used in a temperature region that is significantly higher than the glass transition temperature (Tg) of the liquid crystal elastomer. However, in such cases, the liquid crystal elastomer may have insufficient strength, and therefore, the durability and reliability are unlikely to be sufficient for responsive materials.

As described above, in the related art, the technique of greatly changing the dynamic physical properties or displacement amount of a liquid crystalline polymer in response to a change in temperature while maintaining at least a predetermined strength of the liquid crystalline polymer, has not yet been sufficiently established. There is great room for improvement in liquid crystalline polymers in order to increase the applications thereof. With this in mind, the present invention has been made. Attention has been focused on a change in elastic modulus or rupture stress that occurs when a liquid crystalline polymer undergoes phase transition from a liquid crystalline phase to an isotropic phase in response to a change in temperature. It is an object of the present invention to provide a thermoresponsive material that has at least a predetermined strength (durability), and excellent responsiveness. It is another object of the present invention to provide a heat control device and fiber using the thermoresponsive material.

### SOLUTION TO PROBLEM

To achieve the above object, the present invention provides a thermoresponsive material comprising:
a liquid crystalline polymer that reversibly transitions between a liquid crystalline phase and an isotropic phase, in response to a change in temperature, the liquid crystalline polymer serving as a matrix,
   wherein
E₁/E₂ ≤ 1000 is satisfied,
   where E₁ represents the elastic modulus of the matrix when the matrix includes the liquid crystalline phase, and E₂ represents the elastic modulus of the matrix when the matrix includes the isotropic phase.

It is commonly known that the structure of a polymer material significantly affects its own physical properties. For thermoresponsive materials containing a liquid crystalline polymer, to identify a correlation between the phase structure (a liquid crystalline phase and an isotropic phase) and dynamic physical properties of the liquid crystalline polymer greatly assists in designing the thermoresponsive materials. Therefore, in order to develop a novel thermoresponsive material containing a liquid crystalline polymer as a matrix, the present inventors have focused attention on a change in dynamic physical properties depending on a change in the phase structure (phase transition) of a liquid crystalline polymer, and searched for a thermoresponsive material that meets the purpose of the present invention by changing the elastic modulus of the matrix that includes either the liquid crystalline phase or the isotropic phase.

In the thermoresponsive material having the above feature, a liquid crystalline polymer that reversibly transitions between a liquid crystalline phase and an isotropic phase in response to a change in temperature is used as a matrix, and E₁/E₂ ≤ 1000 is satisfied, where E₁ represents the elastic modulus of the matrix when the matrix includes the liquid crystalline phase, and E₂ represents the elastic modulus of the matrix when the matrix includes the isotropic phase. In the thermoresponsive material satisfying this condition, when phase transition occurs between the liquid crystalline phase and the isotropic phase, the elastic modulus of the matrix changes by a factor of up to 1000. In this case, the phase transition increases or decreases the order of the molecular structure of the liquid crystalline polymer (entropy increases or decreases), and in response to this, the matrix is displaced (expands or contracts). Note that even when the matrix is displaced, the change rate of the elastic modulus of the matrix is maintained within 1000 as described above. Thus, the thermoresponsive material having the above feature can greatly change its elastic modulus between the liquid crystalline phase and the isotropic phase while maintaining at least a predetermined strength (durability), and therefore, is useful as a material having thermoresponsiveness attributed to phase transition.

In the thermoresponsive material according to the present invention,
E₂ is preferably 0.1 MPa or more.

In the thermoresponsive material having the above feature, E₂ is set to a significant value. Therefore, the thermoresponsive material having the above feature is useful as a practical one having sufficient durability.

To achieve the above object, the present invention provides a thermoresponsive material comprising:
a liquid crystalline polymer that reversibly transitions between a liquid crystalline phase and an isotropic phase, in response to a change in temperature, the liquid crystalline polymer serving as a matrix,
   wherein
σ₁/σ₂ ≤ 40 is satisfied,
   where σ₁ represents the rupture stress of the matrix when the matrix includes the liquid crystalline phase, and σ₂ represents the rupture stress of the matrix when the matrix includes the isotropic phase.

The present inventors have also searched for a thermoresponsive material that meets the purpose of the present invention by changing the rupture stress of the matrix that includes either the liquid crystalline phase or the isotropic phase.

In the thermoresponsive material having the above feature, a liquid crystalline polymer that reversibly transitions between a liquid crystalline phase and an isotropic phase in response to a change in temperature is used as a matrix, and σ₁/σ₂ ≤ 40 is satisfied, where σ₁ represents the rupture stress of the matrix when the matrix includes the liquid crystalline phase, and σ₂ represents the rupture stress of the matrix when the matrix includes the isotropic phase. In the thermoresponsive material satisfying this condition, when phase transition occurs between the liquid crystalline phase and the isotropic phase, the rupture stress of the matrix changes by a factor of up to 40. In this case, the phase transition increases or decreases the order of the molecular structure of the liquid crystalline polymer (entropy increases or decreases), and in response to this, the matrix is displaced (expands or contracts). Note that even when the matrix is displaced, the change rate of the rupture stress of the matrix is maintained within 40 as described above. Thus, the thermoresponsive material having the above feature can greatly change its rupture stress between the liquid crystalline phase and the isotropic phase while maintaining at least a predetermined strength (durability), and therefore, is useful as a material having thermoresponsiveness attributed to phase transition.

In the thermoresponsive material according to the present invention,
σ₂ is preferably 0.5 MPa or more.

In the thermoresponsive material having the above feature, σ₂ is set to a significant value. Therefore, the thermoresponsive material having the above feature is useful as a practical one having sufficient durability.

In the thermoresponsive material according to the present invention,
a phase transition temperature (Ti) which is a boundary between the liquid crystalline phase and the isotropic phase is preferably higher than or equal to the glass transition temperature (Tg) of the liquid crystalline polymer and lower than or equal to 100°C.

In the thermoresponsive material having the above feature, the phase transition temperature (Ti) of the liquid crystalline polymer is between the glass transition temperature (Tg) and 100°C. Therefore, the elastic modulus or rupture stress of the matrix greatly changes in a relatively low temperature region including room temperature, and therefore, the thermoresponsive material is highly convenient and practical.

In the thermoresponsive material according to the present invention,
a difference between the phase transition temperature (Ti) and the glass transition temperature (Tg) is preferably 20°C or more.

In the thermoresponsive material having the above feature, the difference between the phase transition temperature (Ti) and the glass transition temperature (Tg) is 20°C or more. Therefore, a wide liquid crystalline phase region in which the elastic modulus or rupture stress is great is ensured, and therefore, the thermoresponsive material is highly convenient and practical.

In the thermoresponsive material according to the present invention,
the liquid crystalline polymer is preferably a liquid crystalline polyurethane.

In the thermoresponsive material having the above feature, the liquid crystalline polyurethane provides both liquid crystallinity and elasticity. In particular, the thermoresponsive material can be used as a thermoresponsive elastic material that reversibly expands and contracts in response to a change in temperature.

In the thermoresponsive material according to the present invention,
the liquid crystalline polyurethane preferably contains a reaction product of a mesogen group-containing compound having an active hydrogen group, an isocyanate compound, an alkylene oxide and/or a styrene oxide, and a cross-linking agent.

In the thermoresponsive material having the above feature, when the mesogen group-containing compound having an active hydrogen group, the isocyanate compound, the alkylene oxide and/or the styrene oxide, and the cross-linking agent are reacted together to generate a liquid crystalline polyurethane, the alkylene oxide and/or the styrene oxide act to decrease the thermal stability of mesogen groups contained in the liquid crystalline polyurethane, so that the temperature at which liquid crystallinity occurs in the liquid crystalline polyurethane is lowered, and therefore, the thermoresponsive material can be molded without a solvent at room temperature.

In the thermoresponsive material according to the present invention,
the cross-linking agent is preferably a polyol having at least three reactive functional groups.

In the thermoresponsive material having the above feature, a polyol having at least three reactive functional groups is used as the cross-linking agent. Therefore, a dense matrix is obtained, and therefore, the material can have at least a predetermined strength. Polyols having at least three reactive functional groups have less steric hindrance in their molecular structure, and therefore, inhibit excessive changes in elastic modulus or rupture stress between before and after the phase transition temperature of the liquid crystalline polymer. Therefore, when the thermoresponsive material transitions from the liquid crystalline phase to the isotropic phase, the decrease in stress of the matrix can be reduced while the thermoresponsiveness is maintained.

In the thermoresponsive material according to the present invention,
the blended amount of the cross-linking agent is preferably 0.1 to 20 parts by weight with respect to a total of 100 parts by weight of the mesogen group-containing compound, the isocyanate compound, the alkylene oxide and/or the styrene oxide, and the cross-linking agent.

In the thermoresponsive material having the above feature, when the blended amount of the cross-linking agent in the raw materials for the liquid crystalline polyurethane is within a suitable range, the mesogen groups can move to an appropriate extent in the liquid crystalline polyurethane, resulting in well-balanced thermoresponsiveness and liquid crystallinity.

In the thermoresponsive material according to the present invention,
bubbles are preferably dispersed in the matrix.

In the thermoresponsive material having the above feature, bubbles are dispersed in the matrix, and therefore, the thermoresponsive material has enhanced heat insulating properties, and can be used within a wide temperature range.

To achieve the above object, the present invention provides a heat control device comprising:
any one of the above thermoresponsive materials.

The heat control device having the above feature contains the above thermoresponsive material, and therefore, has at least a predetermined strength (durability), and is useful as one that has excellent thermoresponsiveness. In addition, the above thermoresponsive material has a great displacement amount provided by phase transition from the liquid crystalline phase to the isotropic phase. Therefore, the heat control device having the above feature can be used as an actuator for a heat dissipation member.

To achieve the above object, the present invention provides a fiber produced by spinning any one of the above thermoresponsive materials.

The fiber having the above feature is produced by spinning the above thermoresponsive material, and therefore, has at least a predetermined strength (durability), and is useful as one that has excellent thermoresponsiveness. In addition, the above thermoresponsive material has a great displacement amount provided by phase transition from the liquid crystalline phase to the isotropic phase. Therefore, the fiber having the above feature can be used as a clothing product that requires elasticity, such as sportswear or support.

### BRIEF DESCRIPTION OF DRAWINGS

[FIG. 1] FIG. 1 is a diagram for describing a relationship between a phase structure and elastic modulus of a thermoresponsive material, depending on a change in temperature.
[FIG. 2] FIG. 2 is a diagram for describing a thermoresponsive material, showing the rupture stress thereof that changes, depending on a change in phase structure.
[FIG. 3] FIG. 3 is a diagram for describing a heat control device to which a thermoresponsive material is applied.
[FIG. 4] FIG. 4 is a diagram for describing a clothing product to which a thermoresponsive material is applied.
[FIG. 5] FIG. 5 is a graph of a tensile test using a test piece of Example 5.

### DESCRIPTION OF EMBODIMENTS

Embodiments of a thermoresponsive material according to the present invention, and a heat control device and fiber using the thermoresponsive material, will now be described. Note that the present invention is in no way limited to the embodiments described below or configurations shown in the accompanying drawings.

### (Composition of Thermoresponsive Material)

The thermoresponsive material of the present invention is an elastomer containing a liquid crystalline polymer as a matrix. As used herein, the "matrix" means the main component of the material. Therefore, the thermoresponsive material of the present invention does not exclude the possibility of containing, in addition to the main component, a small amount of a sub-component or sub-components (e.g., other polymers, low-molecular-weight substances, fillers, etc.) and a small three-dimensional structure or structures (e.g., bubbles, voids, etc.).

Examples of the liquid crystalline polymer as the matrix include liquid crystalline polyurethanes, liquid crystalline silicone resins, liquid crystalline acrylate resins, liquid crystalline poly-N-substituted (meth)acrylamides, liquid crystalline polyvinylethers, and the like. Of them, liquid crystalline polyurethanes, which are a liquid crystalline elastomer having both liquid crystallinity and elasticity, are easily processed into fiber, film, foam, and the like. Liquid crystalline polyurethanes are preferably used as the matrix of the thermoresponsive material of the present invention. Therefore, in the embodiments below, the thermoresponsive material that contains a liquid crystalline polyurethane as the liquid crystalline polymer is particularly illustrated.

A liquid crystalline polyurethane is produced by reacting a mesogen group-containing compound having an active hydrogen group (hereinafter simply referred to as a "mesogen group-containing compound"), an isocyanate compound, an alkylene oxide and/or a styrene oxide, and a cross-linking agent together.

As the mesogen group-containing compound, a compound represented by general formula (1) below is used, for example.

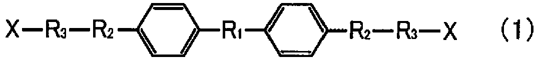

In general formula (1), X represents an active hydrogen group, R₁ represents a single bond, -N=N-, -CO-, -CO-O-, or - CH=N-, R₂ represents a single bond or -O-, and R₃ represents a single bond or an alkylene group having 1 to 20 carbon atoms. Note that those in which R₂ represents -O- and R₃ represents a single bond are excluded. Examples of X include OH, SH, NH₂, COOH, secondary amines, and the like.

As the isocyanate compound, a diisocyanate compound or a trifunctional or higher-functional isocyanate compound can be used, for example. Examples of the diisocyanate compound include: aromatic diisocyanates, such as 2,4-toluene diisocyanate, 2,6-toluene diisocyanate, 2,2'-diphenylmethane diisocyanate, 2,4'-diphenylmethane diisocyanate, 4,4'-diphenylmethane diisocyanate, 1,5-naphthalene diisocyanate, p-phenylene diisocyanate, m-phenylene diisocyanate, p-xylylene diisocyanate, and m-xylylene diisocyanate; aliphatic diisocyanates, such as ethylene diisocyanate, 2,2,4-trimethylhexamethylene-1,6-diisocyanate, 2,4,4-trimethylhexamethylene-1,6-diisocyanate, and 1,6-hexamethylene diisocyanate; and alicyclic diisocyanates, such as 1,4-cyclohexane diisocyanate, 4,4'-dicyclohexylmethane diisocyanate, isophorone diisocyanate, and norbornane diisocyanate. These diisocyanate compounds may be used alone or in combination. Examples of the trifunctional or higher-functional isocyanate compound include: triisocyanates, such as triphenylmethane triisocyanate, tris(isocyanatophenyl)thiophosphate, lysine ester triisocyanate, 1,3,6-hexamethylene triisocyanate, 1,6,11-undecane triisocyanate, 1,8-diisocyanate-4-isocyanatomethyl octane, and bicycloheptane triisocyanate; and tetraisocyanates, such as tetraisocyanatesilane. These trifunctional or higher-functional isocyanate compounds may be used alone or in combination. As the isocyanate compound, a mixture of the above diisocyanate compounds and the above trifunctional or higher-functional isocyanate compounds can be used. The blended amount of the isocyanate compound is adjusted to 10 to 40 wt%, preferably 15 to 30 wt%, with respect to all the raw materials for the liquid crystalline polyurethane. If the blended amount of the isocyanate compound is less than 10 wt%, polymerization by a urethane reaction is insufficient, so that it is difficult to continuously mold the liquid crystalline polyurethane. If the blended amount of the isocyanate compound exceeds 40 wt%, the blended amount of the mesogen group-containing compound is relatively small with respect to all the raw materials, and therefore, the liquid crystallinity of the liquid crystalline polyurethane decreases.

As the alkylene oxide, ethylene oxide, propylene oxide, or butylene oxide can be used, for example. These alkylene oxides may be used alone or in combination. The styrene oxide may be those that have a substituent, such as an alkyl group, an alkoxyl group, or halogen, on the benzene ring. The alkylene oxide may be a mixture of the above alkylene oxides and the above styrene oxides. The blended amount of the alkylene oxide and/or the styrene oxide is adjusted to 1 to 10 mol, preferably 2 to 6 mol, with respect to one mol of the mesogen group-containing compound. If the number of moles of the alkylene oxide and/or styrene oxide added is less than one mol, it is difficult to sufficiently reduce the temperature range within which the liquid crystalline polyurethane has liquid crystallinity, and therefore, it is difficult to continuously mold the liquid crystalline polyurethane while reacting and curing the raw materials in the absence of a solvent and with the liquid crystallinity occurring. If the number of moles of the alkylene oxide and/or styrene oxide added exceeds 10 mol, the liquid crystalline polyurethane is likely to have difficulty in having liquid crystallinity.

As the cross-linking agent, a polyol having at least three reactive functional groups can be used, for example. If such a polyol is used as the cross-linking agent, a dense matrix is obtained, and therefore, the material can have at least a predetermined strength. Such polyols have less steric hindrance in their molecular structure, and therefore, inhibit excessive changes in elastic modulus and rupture stress between before and after the phase transition temperature of the liquid crystalline polymer (a change in elastic modulus and a change in rupture stress will be described in detail below). Therefore, when the thermoresponsive material transitions from a liquid crystalline phase to an isotropic phase, the decrease in stress of the matrix can be reduced while the thermoresponsiveness is maintained. Examples of the polyol having at least three reactive functional groups include: high-molecular-weight polyols having three or more hydroxy groups (molecular weight: 400 or more), such as polyether polyols, polyester polyols, polycarbonate polyols, and polyester polycarbonate polyols; and low-molecular-weight polyols, such as trimethylolpropane, glycerol, 1,2,6-hexanetriol, meso-erythritol, pentaerythritol, tetramethylol cyclohexane, methyl glucoside, sorbitol, mannitol, dulcitol, sucrose, 2,2,6,6-tetrakis(hydroxymethyl)cyclohexanol, and triethanolamine. These polyols may be used alone or in combination. The blended amount of the cross-linking agent is adjusted to 0.1 to 20 parts by weight, preferably 0.2 to 18 parts by weight, with respect to a total of 100 parts by weight of all the raw materials (the mesogen group-containing compound, the isocyanate compound, the alkylene oxide and/or styrene oxide, and the cross-linking agent). When the blended amount of the cross-linking agent is within such a range, the mesogen groups can move to an appropriate extent in the liquid crystalline polyurethane, resulting in well-balanced thermoresponsiveness and liquid crystallinity. If the blended amount of the cross-linking agent is less than 0.1 parts by weight, the liquid crystalline polyurethane is not sufficiently cured, and therefore, the matrix itself is likely to flow, resulting in a failure to achieve thermoresponsiveness. If the blended amount of the cross-linking agent exceeds 20 parts by weight, the liquid crystalline polyurethane has an excessively high cross-link density, and therefore, the alignment of the mesogen groups is likely to be inhibited, resulting in difficulty in achieving liquid crystallinity and therefore a failure to achieve thermoresponsiveness.

The liquid crystalline polyurethane is produced by, for example, the following reaction scheme. Initially, the mesogen group-containing compound and the alkylene oxide and/or styrene oxide are reacted together to formulate an adduct between the mesogen group-containing compound and the alkylene oxide and/or styrene oxide (the adduct is hereinafter referred to as the "mesogen diol"). The cross-linking agent and the isocyanate compound are added to the resultant mesogen diol, following by mixing while heating, to obtain a half-cured liquid crystalline urethane compound (pre-polymer). When the half-cured liquid crystalline urethane compound is cured under suitable conditions, the liquid crystalline urethane compound is cured while being polymerized, to form the liquid crystalline polyurethane (elastomer). The liquid crystalline polyurethane is formed into fiber, film, foam, or the like, depending on the application thereof. In this case, when the liquid crystalline polyurethane is formed while being stretched at a temperature that is higher than or equal to the glass transition temperature (Tg) and lower than or equal to the phase transition temperature (Ti) (i.e., a temperature at which liquid crystallinity occurs), the mesogen groups contained in the liquid crystalline polyurethane are moved and highly aligned in the stretching direction. When the stretched liquid crystalline polyurethane is cured, the thermoresponsive material having both liquid crystallinity and elasticity is completed. When the thermoresponsive material is heated, the mesogen groups in the liquid crystalline polyurethane, which are normally aligned in the stretching direction, are disaligned (irregularly oriented), so that the thermoresponsive material contracts in the stretching direction. When the heat is removed, the alignment of the mesogen groups is restored, so that the thermoresponsive material expands in the stretching direction, which is a remarkable thermoresponsive behavior.

Incidentally, the alignment properties of the liquid crystalline polyurethane can be evaluated by the degree of alignment of the mesogen groups. The mesogen groups having a higher degree of alignment are more highly aligned in a uniaxial direction. The degree of alignment is calculated on the basis of the following calculation expression having, as parameters, the antisymmetric-stretching-vibrational absorbance (0°, 90°) of an aromatic ether and the symmetric-bending-vibrational absorbance (0°, 90°) of a methyl group, which are measured by one-time attenuated total reflection (ATR) using a Fourier-transform infrared spectrometer (FT-IR).
Degree of alignment = (A - B)/(A + 2B)
A: (the antisymmetric-stretching-vibrational absorbance of an aromatic ether as measured at 0°)/(the symmetric-bending-vibrational absorbance of a methyl group as measured at 0°)
B: (the antisymmetric-stretching-vibrational absorbance of an aromatic ether as measured at 90°)/(the symmetric-bending-vibrational absorbance of a methyl group as measured at 90°)

To cause significant elasticity to occur in the thermoresponsive material, the degree of alignment of the liquid crystalline polyurethane is preferably 0.05 or more, more preferably 0.1 or more.

The liquid crystalline polyurethane obtained by the above reaction scheme can be directly used as the matrix of the thermoresponsive material of the present invention. Alternatively, a small amount of a sub-component or sub-components may be added to the liquid crystalline polyurethane, or bubbles may be dispersed in the liquid crystalline polyurethane. Examples of the sub-components that can be added to the liquid crystalline polyurethane include organic fillers, inorganic fillers, reinforcing agents, thickeners, release agents, excipients, coupling agents, flame retardants, flame-resistant agents, pigments, colorants, deodorants, antimicrobial agents, antifungal agents, antistatic agents, UV protective agents, surfactants, and the like. As a sub-component, another polymer or a low-molecular-weight substance can be added. The liquid crystalline polyurethane additionally containing sub-components has the functions of the sub-components, and therefore, can be used in more applications.

The bubbles may be dispersed in the matrix (liquid crystalline polyurethane) by, for example, the following method. A blowing agent is blended with the raw materials for the liquid crystalline polyurethane so that bubbles are generated during a curing reaction of the liquid crystalline polyurethane. In this case, as the blowing agent, sodium hydrogen carbonate can be used, for example. Alternatively, the bubbles can be dispersed in the matrix by, for example, the following methods: mixing the raw materials for the liquid crystalline polyurethane such that air is incorporated into the raw materials; mechanical frothing for forming bubbles in the matrix; mixing hollow fillers into the raw materials for the liquid crystalline polyurethane so that the hollow fillers are dispersed in the matrix; and the like. The thermoresponsive material in which the bubbles are dispersed in the matrix has heat insulating properties enhanced by the bubbles, and therefore, can be used in an environment in which temperature changes radically. In addition, the presence of the bubbles in the matrix contributes to a reduction in the weight of the thermoresponsive material. Therefore, the thermoresponsive material is suitably applied to, for example, transport machines, such as automobiles.

### (Physical Properties of Thermoresponsive Material)

The thermoresponsive material of the present invention has a feature that the dynamic physical properties of the liquid crystalline polyurethane as the matrix differ significantly between a state in which the liquid crystalline polyurethane includes a liquid crystalline phase and a state in which the liquid crystalline polyurethane includes an isotropic phase. In the description that follows, the influence of the phase structure of the liquid crystalline polyurethane, particularly, on the elastic modulus and rupture stress thereof will be described.

### (Relationship between Phase Structure and Elastic modulus of Liquid Crystalline Polyurethane)

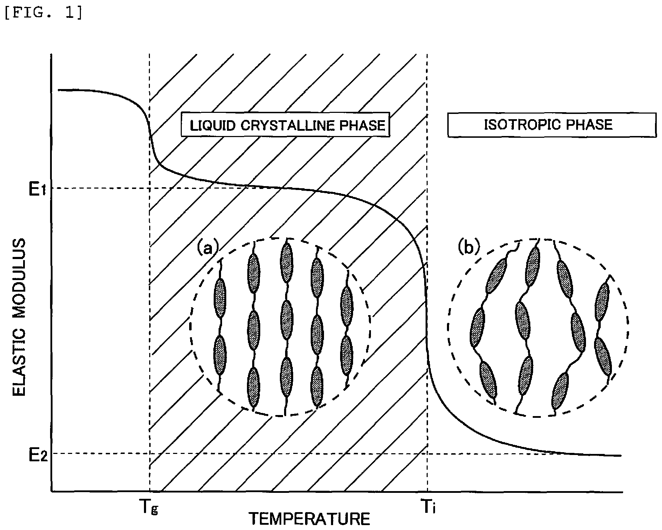

FIG. 1 is a diagram for describing a relationship between the phase structure and elastic modulus of the thermoresponsive material of the present invention, which changes, depending on a change in temperature. When the thermoresponsive material is heated from its low-temperatrue state so that the temperature continuously increases, the elastic modulus of the liquid crystalline polymer as the matrix decreases at the glass transition temperature (Tg) as a boundary. However, in a region exceeding the glass transition temperature (Tg), the elastic modulus is maintained. This is because, as shown by an illustration in a dashed-line circle (a), the mesogen groups of the liquid crystalline polymer are aligned at temperatures higher than the glass transition temperature (Tg), so that the liquid crystalline phase occurs, and stress can be borne by the mesogen groups in the alignment direction. When the thermoresponsive material in such a state is further heated, the elastic modulus of the liquid crystalline polymer significantly decreases at the phase transition temperature (Ti) as a boundary. This is because, as shown by an illustration in a dashed-line circle (b), the mesogen groups of the liquid crystalline polymer are disalgined (irregularly oriented), so that the liquid crystalline polymer undergoes phase transition from the liquid crystalline phase to the isotropic phase, and the ability of the mesogen groups to bear stress is reduced. Here, the thermoresponsive material of the present invention is designed to satisfy the following condition 1:
<Dynamic condition 1>: E₁/E₂ ≤ 1000 where E₁ represents the elastic modulus of the liquid crystalline polymer as the matrix when the liquid crystalline polymer includes the liquid crystalline phase, and E₂ represents the elastic modulus of the liquid crystalline polymer as the matrix when the liquid crystalline polymer includes the isotropic phase.

The elastic modulus E₁ may be, for example, one that is measured at a temperature which is lower than the phase transition temperature (Ti) of the liquid crystalline polymer by 10 to 30°C. The elastic modulus E₂ may be, for example, one that is measured at a temperature which is higher than the phase transition temperature (Ti) of the liquid crystalline polymer by 10 to 30°C. Note that the elastic modulus may be either a Young's modulus E obtained by a tensile test, or a storage modulus E' obtained by dynamic viscoelasticity measurement.

The thermoresponsive material satisfying the dynamic condition 1 may decrease the elastic modulus E of the matrix by a factor of up to 1000 when the phase transition occurs between the liquid crystalline phase and the isotropic phase. Specifically, when the phase transition from the liquid crystalline phase to the isotropic phase occurs, the elastic modulus of the matrix decreases by a factor of 1000. At this time, the mesogen groups that have been aligned are irregularly oriented due to the phase transition, and therefore, the order of the molecular structure of the liquid crystalline polymer increases (entropy increases), so that the size of the matrix contracts in the alignment direction and expands in the non-alignment direction. Conversely, when the phase transition from the isotropic phase to the liquid crystalline phase occurs, the elastic modulus of the matrix may increase by a factor of up to 1000. At this time, the mesogen groups that have been irregularly oriented due to the phase transition are realigned, and therefore, the order of the molecular structure of the liquid crystalline polymer decreases (entropy decreases), so that the size of the matrix expands in the alignment direction and contracts in the non-alignment direction. Although, in the dynamic condition 1, the lower limit value of E₁/E₂ is not specified, FIG. 1 implies a less practical possibility that the elastic modulus E₁ becomes smaller than the elastic modulus E₂, and therefore, it is reasonable that the value of E₁/E₂ is greater than one. Therefore, even when the matrix is displaced due to the phase transition, the change rate of the elastic modulus of the matrix is maintained within 1000 as described above. Thus, the thermoresponsive material of the present invention can greatly change its elastic modulus between the liquid crystalline phase and the isotropic phase while maintaining at least a predetermined strength (durability), and therefore, is useful as a material having thermoresponsiveness attributed to phase transition.

In order to impart a practical strength to the thermoresponsive material, the values of E₁ and E₂ defined above are preferably greater than or equal to a predetermined value. In the present invention, particularly, E₂ as measured at a temperature higher than the phase transition temperature (Ti) of the liquid crystalline polymer is set to 0.1 MPa or more, preferably 0.12 MPa or more. When E₂ is 0.1 MPa or more, the thermoresponsive material preferably has sufficient durability for practical use. Note that, as to the value of E₁, for example, E₁ ≤ 100 MPa in the case where E₂ = 0.1 MPa according to the dynamic condition 1.

### (Relationship between Phase Structure and Rupture Stress of Liquid Crystalline Polyurethane)

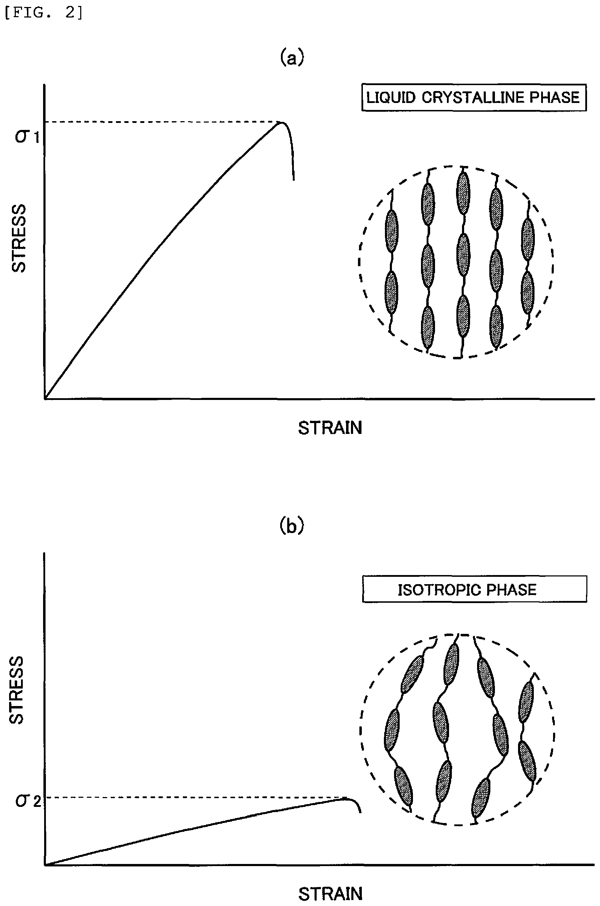

FIG. 2 is a diagram (stress-strain curve) for describing the thermoresponsive material of the present invention, showing the rupture stress thereof that changes, depending on a change in phase structure. For example, when a tensile stress is applied to the thermoresponsive material of the present invention, which is an elastomer, the thermoresponsive material expands in the tensile direction. As the applied tensile stress is increased, the thermoresponsive material further expands. When the tensile stress exceeds a limit value, the thermoresponsive material is ruptured. The stress at which the thermoresponsive material is ruptured is a rupture stress. In the thermoresponsive material of the present invention, when the liquid crystalline polyurethane as the matrix is in a state in which the liquid crystalline polyurethane includes the liquid crystalline phase, the mesogen groups of the liquid crystalline polymer are aligned as shown in FIG. 2(a), so that the liquid crystalline phase occurs, and the mesogen groups can bear stress in the alignment direction, and therefore, the thermoresponsive material has relatively high rupture stress. Meanwhile, when the liquid crystalline polyurethane is in a state in which the liquid crystalline polyurethane includes the isotropic phase, the mesogen groups of the liquid crystalline polymer are disaligned as shown in FIG. 2(b), and undergoes phase transition from the liquid crystalline phase to the isotropic phase, and the ability of the mesogen groups to bear stress is reduced, and therefore, the rupture stress decreases significantly. Here, the thermoresponsive material of the present invention is designed to satisfy the following condition 2:
<Dynamic condition 2>: σ₁/σ₂ ≤ 40 where σ₁ represents a rupture stress when the liquid crystalline polymer as the matrix includes the liquid crystalline phase, and σ₂ represents rupture stress when the liquid crystalline polymer as the matrix includes the isotropic phase.

The rupture stress σ₁ may be, for example, one that is measured at a temperature which is lower than the phase transition temperature (Ti) of the liquid crystalline polymer by 10 to 30°C. The rupture stress σ₂ may be, for example, one that is measured at a temperature which is higher than the phase transition temperature (Ti) of the liquid crystalline polymer by 10 to 30°C.

When the thermoresponsive material that satisfies the dynamic condition 2 undergoes phase transition between the liquid crystalline phase and the isotropic phase, the rupture stress σ of the matrix changes by a factor of up to 40. Specifically, when the phase transition from the liquid crystalline phase to the isotropic phase occurs, the rupture stress of the matrix may decrease by a factor of up to 40. At this time, the mesogen groups that have been aligned are disaligned or irregularly oriented due to the phase transition, and the order of the molecular structure of the liquid crystalline polymer increases (entropy increases), so that the matrix is displaced such that the size of the matrix contracts in the alignment direction and expands in the non-alignment direction. Conversely, when the phase transition from the isotropic phase to the liquid crystalline phase occurs, the rupture stress of the matrix may increase by a factor of up to 40. At this time, the mesogen groups that have been irregularly oriented are realigned due to the phase transition, and the order of the molecular structure of the liquid crystalline polymer decreases (entropy decreases), so that the matrix is displaced such that the size of the matrix expands in the alignment direction and contracts in the non-alignment direction. Although, in the dynamic condition 2, the lower limit value of σ₁/σ₂ is not specified, it is less practically possible that the rupture stress σ₁ becomes smaller than the rupture stress σ₂ as with the relationship between the elastic modulus E₁ and E₂, and therefore, it is reasonable that the value of σ₁/σ₂ be greater than one. Therefore, even when the matrix is displaced due to the phase transition, the change rate of the rupture stress of the matrix is maintained within 40 as described above. Thus, the thermoresponsive material of the present invention can greatly change its rupture stress between the liquid crystalline phase and the isotropic phase while maintaining at least a predetermined strength (durability), and therefore, is useful as a material having thermoresponsiveness attributed to phase transition.

In order to impart a practical strength to the thermoresponsive material, the values of σ₁ and σ₂ defined above are preferably greater than or equal to a predetermined value. In the present invention, particularly, σ₂ as measured at a temperature higher than the phase transition temperature (Ti) of the liquid crystalline polymer is set to 0.5 MPa or more, preferably 1.0 MPa or more. When σ₂ is 0.5 MPa or more, the thermoresponsive material preferably has sufficient durability for practical use. Note that, as to the value of σ₁, for example, σ₁ ≤ 20 MPa in the case where σ₂ = 0.5 MPa according to the dynamic condition 2.

### (Glass Transition Temperature (Tg) and Phase Transition Temperature (Ti) of Liquid Crystalline Polyurethane)

In order to allow the thermoresponsive material to be used in a temperature region including room temperature, a liquid crystalline polymer that has a glass transition temperature (Tg) and a phase transition temperature (Ti) suitable for a matrix is preferably selected. In the present invention, a liquid crystalline polymer is preferably used that has a phase transition temperature (Ti) which is higher than or equal to the glass transition temperature (Tg) of the liquid crystalline polymer and lower than or equal to 100°C. Furthermore, the difference between the phase transition temperature (Ti) and the glass transition temperature (Tg) is preferably 20°C or more, more preferably 25°C or more. When the thermoresponsive material contains such a liquid crystalline polymer as the matrix, the elastic modulus and rupture stress of the matrix greatly change in a relatively low temperature region including room temperature, and in addition, a wide liquid crystalline phase region in which the elastic modulus is great is ensured, and therefore, the thermoresponsive material has excellent thermoresponsive, and is highly convenient and practical.

A liquid crystalline polymer that satisfies the dynamic condition 1 for the elastic modulus E₁ and E₂, the dynamic condition 2 for the rupture stresses σ₁ and σ₂, and the above glass transition temperature (Tg) and phase transition temperature (Ti), and therefore, is suitable for the matrix of the thermoresponsive material of the present invention, is a liquid crystalline polyurethane that has been described above in the section "Composition of Thermoresponsive Material," and is produced by reacting a mesogen group-containing compound, an isocyanate compound, an alkylene oxide and/or a styrene oxide, and a cross-linking agent together. Preferable values of physical properties of a liquid crystalline polyurethane that is usable in the present invention are illustrated as follows.
- Glass transition temperature (Tg): -30 to 60°C
- Phase transition temperature (Ti): 0 to 100°C
- Elastic modulus E₁ at -30 to 60°C: 20 to 120 MPa
- Elastic modulus E₂ at 0 to 100°C: 0.1 to 50 MPa
- Rupture stress σ₁ at -30 to 60°C: 3 to 80 MPa
- Rupture stress σ₂ at 0 to 100°C: 0.5 to 30 MPa

### (Applications of Thermoresponsive Material)

The thermoresponsive material of the present invention can be used in various applications by utilizing the liquid crystallinity and elasticity of the liquid crystalline polyurethane as the matrix. Examples of such applications will be described.

### (Example Application 1: Heat Control Device)

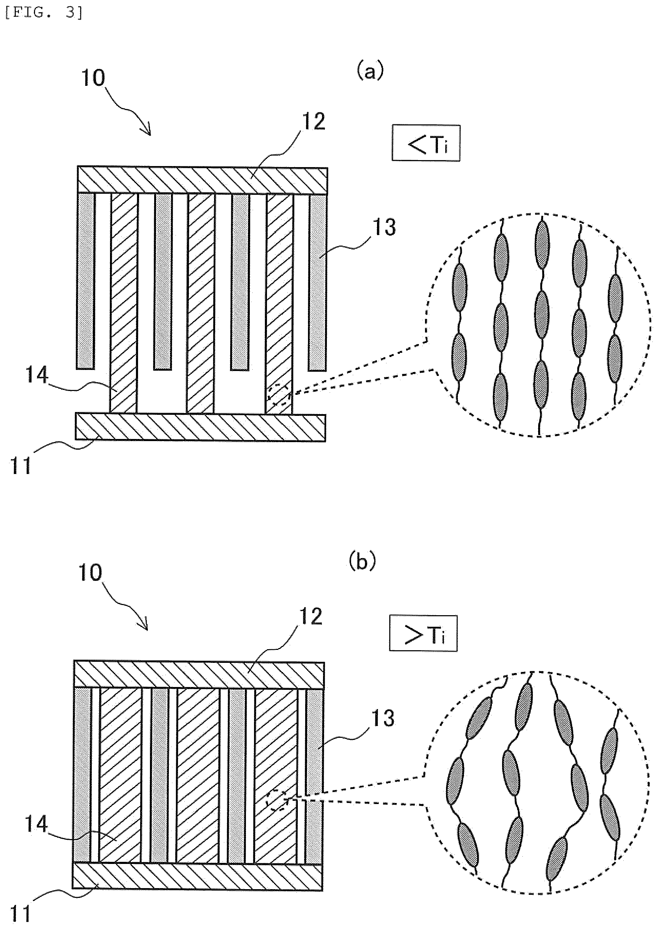

In an example application 1, the thermoresponsive material of the present invention is applied to a heat control device. FIG. 3 is a diagram for describing a heat control device 10 to which the thermoresponsive material is applied.

The heat control device 10 is, for example, attached to an object 11 that is heat-controlled. The heat control device includes a heat dissipation plate 12, a heat conductive member 13, and a support member 14. The heat dissipation plate 12 has the function of receiving heat transferred from the object 11 to the heat conductive member 13 and dissipating the heat to the outside. The heat conductive member 13, which is attached to the heat dissipation plate 12, is configured such that the heat conductive member 13 can be brought into contact with and separated from the object 11. The support member 14, which is provided between the object 11 and the heat dissipation plate 12, supports the heat dissipation plate 12 and the heat conductive member 13 with respect to the object 11.

In the heat control device 10, the thermoresponsive material of the present invention is used in the support member 14. As shown in FIG. 3(a), when the heat control device 10 is in an environment the temperature of which is less than the phase transition temperature (Ti) of the liquid crystalline polyurethane, and as shown by the illustration in the dashed-line circle, the thermoresponsive material included in the support member 14 contains a liquid crystalline phase, the support member 14 expands. Therefore, the heat conductive member 13 is separated from the object 11, and therefore, heat is not transferred from the object 11 to the heat dissipation plate 12. Meanwhile, as shown in FIG. 3(b), when the heat control device 10 is in an environment the temperature of which exceeds the phase transition temperature (Ti) of the liquid crystalline polyurethane, and as shown by the illustration in the dashed-line circle, the thermoresponsive material included in the support member 14 contains an isotropic phase, the support member 14 contracts. Therefore, the heat conductive member 13 is in contact with the object 11, and therefore, heat is transferred from the object 11 to the heat dissipation plate 12. Therefore, by designing the heat control device 10 so that the phase transition temperature (Ti) of the liquid crystalline polyurethane used in the support member 14 of the heat control device 10 falls within the temperatures of the environment in which the heat control device 10 is placed, the object 11 can be suitably heat-controlled.

Incidentally, when the heat control device 10 transitions from the state of FIG. 3(a) to the state of FIG. 3(b), the mesogen groups in the liquid crystalline polyurethane are irregularly oriented due to the increase in temperature, resulting in a decrease in the elastic modulus and rupture stress of the support member 14. Therefore, there is a fear that the strength or durability of the heat control device 10 could be insufficient. However, in the state of FIG. 3(b), the heat conductive member 13 is in contact with the object 11, and therefore, the heat conductive member 13 can share stress with the support member 14. Thus, even if the temperature increase reduces the elastic modulus or rupture stress of the support member 14, the reduction can be compensated for by the heat conductive member 13. As a result, the strength of the entire heat control device 10 can be maintained.

### (Example Application 2: Clothing Product)

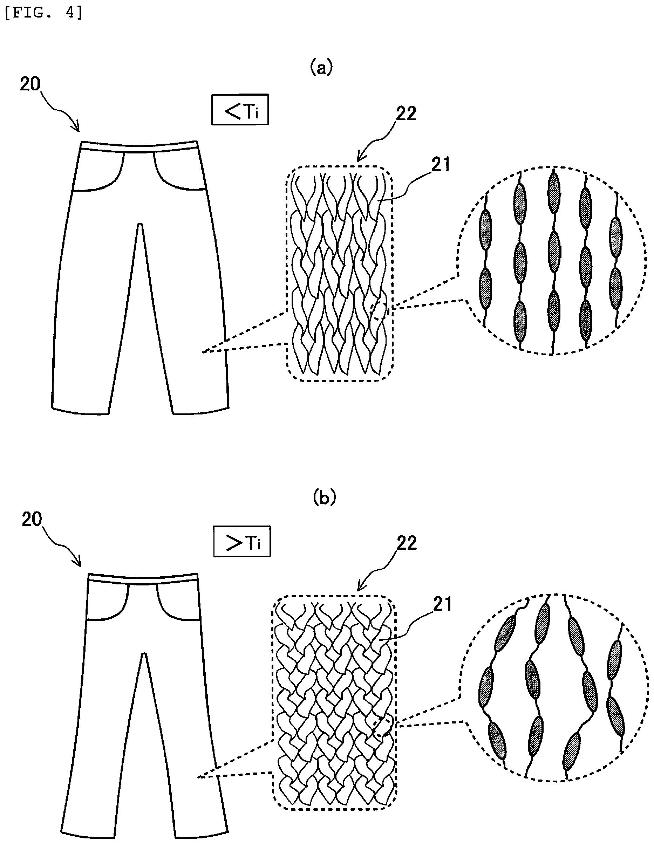

In an example application 2, the thermoresponsive material of the present invention is applied to a clothing product. FIG. 4 is a diagram for describing a clothing product 20 to which the thermoresponsive material is applied.

The clothing product 20 is prepared, for example, by sewing knitted fabric 22 that is knitted using fiber 21 obtained by spinning the thermoresponsive material. The fiber 21 constituting the knitted fabric 22 as a material for the clothing product 20 is produced by spinning a liquid crystalline polyurethane.

In the spun liquid crystalline fiber 21, the molecular chain of the liquid crystalline polyurethane is highly aligned in the fiber-length direction, resulting in excellent liquid crystallinity. As shown in FIG. 4(a), when the clothing product 20 is in an environment where the temperature is less than the phase transition temperature (Ti) of the liquid crystalline polyurethane, and therefore, the thermoresponsive material included in the fiber 21 includes the liquid crystalline phase as shown by an illustration in a dashed-line circle, so that the fiber 21 expands, and therefore, the knitted fabric 22 is relatively loose. Therefore, a user of the clothing product 20 can easily put the clothing product 20 on the user's body. After the user puts on the clothing product 20, the clothing product 20 is heated by the body temperature of the user, and when the temperature exceeds the phase transition temperature (Ti) of the liquid crystalline polyurethane, the thermoresponsive material included in the fiber 21 includes the isotropic phase as shown by an illustration in a dashed-line circle of FIG. 4(b), so that the fiber 21 contracts, and therefore, the knitted fabric 22 contracts, which causes the clothing product 20 to fit the user's body. Therefore, by setting the phase transition temperature (Ti) of the liquid crystalline polyurethane used in the fiber 21 to be lower than the body temperature of a human (approximately 35 to 37°C), the thermoresponsive material of the present invention can be preferably used as a material for a clothing product that requires elasticity, such as sportswear and support.

### Examples

To verify the usefulness of the thermoresponsive material of the present invention, thermoresponsive materials having varied blended amounts of raw materials were produced, and characteristics thereof were evaluated. Examples of the thermoresponsive material will now be described.

### (Synthesis of Liquid Crystalline Polyurethane)

Liquid crystalline polyurethanes that would be used in the matrices of the thermoresponsive materials were synthesized (Examples 1 to 6 and Comparative Examples 1 and 2). Although, in the examples and comparative examples, the unit of the blended amount of each raw material for a liquid crystalline polyurethane is "g," the blended amounts can herein be scaled up by any reasonable factor. In other words, the unit of the blended amount of each raw material for a liquid crystalline polyurethane may be replaced by "parts by weight."

### <Example 1>

BH6 (500 g) as the mesogen group-containing compound having an active hydrogen group, potassium hydroxide (19.0 g), and N,N-dimethyl formamide (3000 ml) as a solvent were put into a reaction container and then mixed, and 2 equivalents of propylene oxide as the alkylene oxide was added with respect to 1 mol of BH6. The resultant mixture was caused to undergo a reaction under applied pressure at 120°C for 2 hours (addition reaction). Next, oxalic acid (15.0 g) was added to the reaction container to stop the addition reaction. Insoluble salts were removed from the reaction liquid by suction filtration. In addition, N,N-dimethyl formamide was removed from the reaction liquid by distillation under reduced pressure. Thus, a mesogen diol A was obtained. A synthesis scheme for the mesogen diol A is represented by formula (2). Note that the mesogen diol A shown in formula (2) is representative, and there may be various structural isomers thereof.

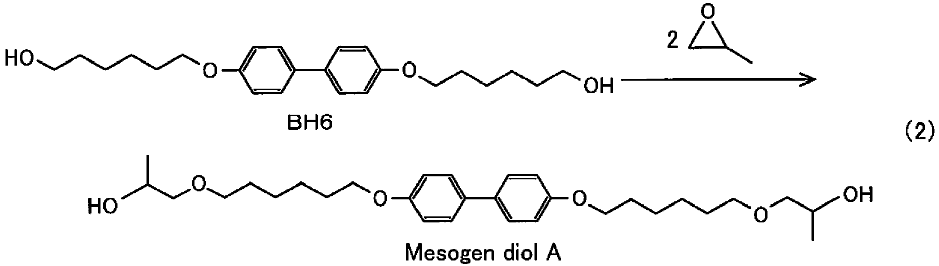

Next, the mesogen diol A (100 g), trimethylolpropane (1.8 g) as a cross-linking agent, and 1,6-hexamethylene diisocyanate (38 g) as the isocyanate compound were mixed together and heated to 100°C. In the mixture of these raw materials, the content of trimethylolpropane, which is a component having three or more reactive functional groups, was 1.3 wt%. Next, the mixture was loaded into a preheated mold, and then reacted and cured at 100°C for 30 minutes, to obtain a half-cured liquid crystalline urethane compound (pre-polymer). The liquid crystalline urethane compound was removed from the mold, followed by uniaxial stretching at 20°C and a stretch ratio of 2. Thereafter, the liquid crystalline urethane compound was completely cured at 20°C while the stretched state was maintained, to obtain a liquid crystalline polyurethane of Example 1 in which liquid crystal (mesogen groups) was aligned.

### <Example 2>

A liquid crystalline polyurethane of Example 2 was obtained in a manner similar to that of Example 1 in terms of raw materials and their blended amounts, and reaction conditions, stretching conditions, and curing conditions, except that when the half-cured liquid crystalline urethane compound was obtained, the blended amount of trimethylolpropane was 3.7 g, the blended amount of 1,6-hexamethylene diisocyanate was 41 g, and the content of trimethylolpropane, which is a component having three or more reactive functional groups, was 2.6 wt% in the mixture of the raw materials.

### <Example 3>

A liquid crystalline polyurethane of Example 3 was obtained in a manner similar to that of Example 1 in terms of raw materials and their blended amounts, and reaction conditions, stretching conditions, and curing conditions, except that when the half-cured liquid crystalline urethane compound was obtained, the blended amount of trimethylolpropane was 0.3 g, the blended amount of 1,6-hexamethylene diisocyanate was 32 g, and the content of trimethylolpropane, which is a component having three or more reactive functional groups, was 0.2 wt% in the mixture of the raw materials.

### <Example 4>

A liquid crystalline polyurethane of Example 4 was obtained in a manner similar to that of Example 1 in terms of raw materials and their blended amounts, and reaction conditions, stretching conditions, and curing conditions, except that when the half-cured liquid crystalline urethane compound was obtained, 30 g of a polyether polyol (trade name "Exenol (registered trademark) 400MP," manufactured by Asahi Glass Co., Ltd) was added as a cross-linking agent, the blended amount of 1,6-hexamethylene diisocyanate was 54 g, and the content of the polyether polyol, which is a component having three or more reactive functional groups, was 16.3 wt% in the mixture of the raw materials.

### <Example 5>

BH6 (500 g) as the mesogen group-containing compound having an active hydrogen group, potassium hydroxide (19.0 g), and N,N-dimethyl formamide (3000 ml) as a solvent were put into a reaction container and then mixed, and 7 equivalents of propylene oxide as the alkylene oxide was added with respect to 2 mol of BH6 (i.e., 3.5 equivalents with respect to 1 mol of BH6). The resultant mixture was caused to undergo a reaction under applied pressure at 120°C for 2 hours (addition reaction). Next, oxalic acid (15.0 g) was added to the reaction container to stop the addition reaction. Insoluble salts were removed from the reaction liquid by suction filtration. In addition, N,N-dimethyl formamide was removed from the reaction liquid by distillation under reduced pressure. Thus, a mesogen diol B was obtained. A synthesis scheme for the mesogen diol B is represented by formula (3). Note that the mesogen diol B shown in formula (3) is representative, and there may be various structural isomers thereof.

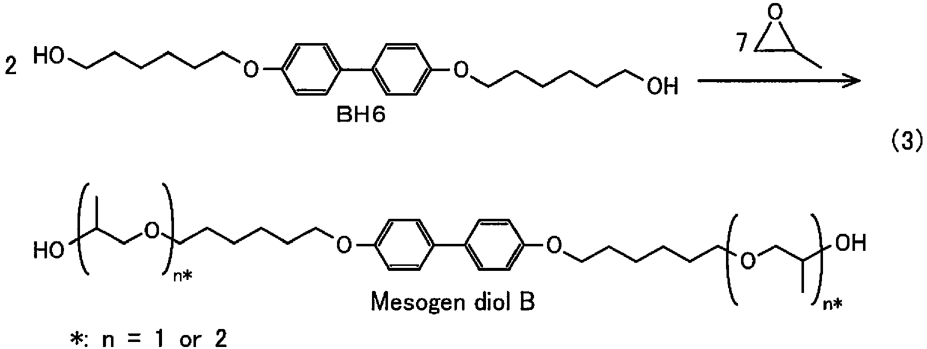

Next, the mesogen diol B (100 g), trimethylolpropane (1.8 g) as a cross-linking agent, and 1,6-hexamethylene diisocyanate (29 g) as the isocyanate compound were mixed together and heated to 100°C. In the mixture of these raw materials, the content of trimethylolpropane, which is a component having three or more reactive functional groups, was 1.4 wt%. Next, this mixture was loaded into a preheated mold, and then reacted and cured at 100°C for 30 minutes, to obtain a half-cured liquid crystalline urethane compound (pre-polymer). The liquid crystalline urethane compound was removed from the mold, followed by uniaxial stretching at 20°C and a stretch ratio of 2. Thereafter, the liquid crystalline urethane compound was completely cured at 20°C while the stretched state was maintained, to obtain a liquid crystalline polyurethane of Example 5 in which liquid crystal (mesogen groups) was aligned.

### <Example 6>

A liquid crystalline polyurethane of Example 6 was obtained in a manner similar to that of Example 1 in terms of raw materials and their blended amounts, and reaction conditions, stretching conditions, and curing conditions, except that when the half-cured liquid crystalline urethane compound was obtained, 1.5 g of trimethylolpropane and 0.3 g of meso-erythritol were added as a cross-linking agent, the blended amount of 1,6-hexamethylene diisocyanate was 35 g, and the total content of trimethylolpropane and meso-erythritol, which are a component having three or more reactive functional groups, was 1.3 wt% in the mixture of the raw materials.

### <Comparative Example 1>

A liquid crystalline polyurethane of Comparative Example 1 was obtained in a manner similar to that of Example 1 in terms of raw materials and their blended amounts, and reaction conditions, stretching conditions, and curing conditions, except that when the half-cured liquid crystalline urethane compound was obtained, the blended amount of trimethylolpropane was 0.04 g, the blended amount of 1,6-hexamethylene diisocyanate was 32 g, i.e., the blended amount of trimethylolpropane as a cross-linking agent was excessively small in the liquid crystal polyurethane of Comparative Example 1, and the content of trimethylolpropane, which is a component having three or more reactive functional groups, was 0.03 wt% in the mixture of the raw materials.

### <Comparative Example 2>

A liquid crystalline polyurethane of Comparative Example 2 was obtained in a manner similar to that of Example 1 in terms of raw materials and their blended amounts, and reaction conditions, stretching conditions, and curing conditions, except that when the half-cured liquid crystalline urethane compound was obtained, 60 g of a polyether polyol was added as a cross-linking agent, the blended amount of 1,6-hexamethylene diisocyanate was 72 g, i.e., the blended amount of the polyether polyol as a cross-linking agent was excessively large in the liquid crystal polyurethane of Comparative Example 2, and the content of the polyether polyol, which is a component having three or more reactive functional groups, was 25.9 wt% in the mixture of the raw materials.

### (Properties of Liquid Crystalline Polyurethane)

The glass transition temperature (Tg), phase transition temperature (Ti), liquid crystallinity, elastic modulus, rupture stress, and thermoresponsiveness of each of the liquid crystalline polyurethanes of Examples 1 to 6 and Comparative Examples 1 and 2, were measured in order to verify properties (physical properties) of a thermoresponsive material. A measuring method and conditions for each measurement item will now be described.

### <Glass Transition Temperature (Tg) and Phase Transition Temperature (Ti)>

The glass transition temperature (Tg) and the phase transition temperature (Ti) of each sample were measured using a differential scanning calorimeter (DSC) (X-DSC 7000, manufactured by Hitachi High-Tech Science Corporation). During the measurement, the temperature was increased at a rate of 20°C/minute.

### <Liquid Crystallinity>

The presence or absence of the liquid crystallinity of each sample was verified by observation using a polarizing microscope (LV-100POL, manufactured by Nikon Corporation). The presence or absence of the liquid crystallinity of each sample was further verified from the results of measurement using a differential scanning calorimeter (DSC) (X-DSC 7000, manufactured by Hitachi High-Tech Science Corporation).

### <Elastic Modulus>

The storage modulus E' of each sample (length: 40 mm, width: 3 mm, and thickness: 2 mm) was measured using a dynamic viscoelasticity measurement device (full automatic viscoelasticity analyzer VR-7110, manufactured by Ueshima Seisakusho Co., Ltd.). The measurement was conducted under the following conditions: the temperature increase rate was 2°C/minute; the measurement mode was a tensile mode; the strain was 0.5%; and the frequency of oscillation was 5 Hz. The elastic modulus E₁ was defined as the storage modulus E' of each sample as measured at a temperature that was lower than the phase transition temperature (Ti) by 20°C, and the elastic modulus E₂ was defined as the storage modulus E' of each sample as measured at a temperature that was higher than the phase transition temperature (Ti) by 20°C.

### <Rupture Stress>

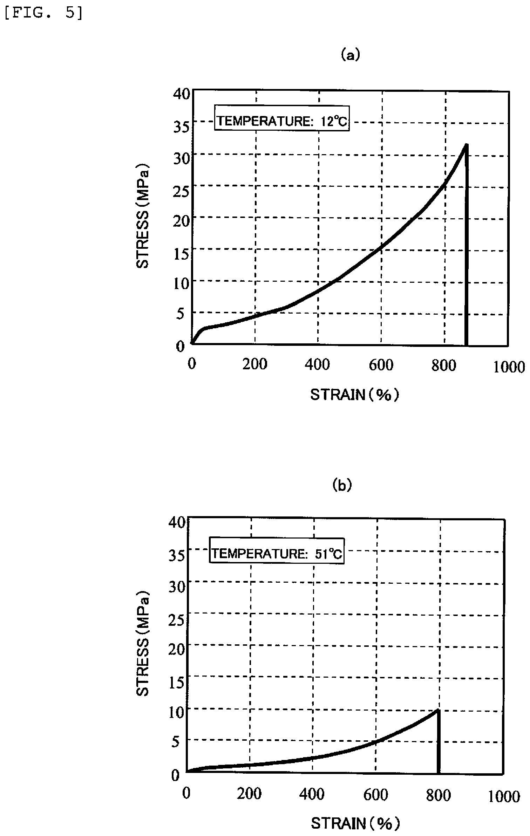

The rupture stress σ of a Type VII dumbbell-shaped test piece having a thickness of 2 mm that was prepared from each sample in accordance with JIS K 6251, was measured using a tensile testing device (precision universal tester (autograph) AG-X, manufactured by Shimadzu Corporation). The measurement was conducted under the following conditions: the temperature was the phase transition temperature (Ti) ± 20°C; and the crosshead speed was 200 mm/min. The rupture stress σ₁ of each sample was defined as a rupture stress σ as measured at a temperature that was lower than the phase transition temperature (Ti) by approximately 20°C, and the rupture stress σ₂ of each sample was defined as a rupture stress σ as measured at a temperature that was higher than the phase transition temperature (Ti) by approximately 20°C. As an example, a graph (chart) of a tensile test on the test piece of Example 5 is shown in FIG. 5. FIG. 5(a) shows the result of the tensile test on the test piece in the liquid crystalline phase at 12°C, and FIG. 5(b) shows the result of the tensile test on the test piece in the isotropic phase at 51°C.

### <Thermoresponsiveness>

A reduction in size (length) in the alignment direction of each sample that occurred due to the phase transition from the liquid crystalline phase to the isotropic phase was measured using a scale. A sample having a higher reduction rate (contraction rate) was rated as being more thermoresponsive.

The measurement results of the samples are shown in Table 1 below.

| | Examples | | | | | | Comparative Examples | |
|---|---|---|---|---|---|---|---|---|
| | 1 | 2 | 3 | 4 | 5 | 6 | 1 | 2 |
| Mesogen diol A [g] | 100 | 100 | 100 | 100 | - | 100 | 100 | 100 |
| Mesogen diol B [g] | - | - | - | - | 100 | - | - | - |
| Trimethylolpropane [g] | 1.8 | 3.7 | 0.3 | - | 1.8 | 1.5 | 0.04 | - |
| Polyether polyol [g] | - | - | - | 30.0 | - | - | - | 60.0 |
| Meso-erythritol [g] | - | - | - | - | - | 0.3 | - | - |
| 1,6-hexamethylene diisocyanate [g] | 38 | 41 | 32 | 54 | 29 | 35 | 32 | 72 |
| Glass transition temperature (T_{g}) [° C] | 21 | 20 | 17 | 30 | -6 | 23 | 18 | 40 |
| Phase transition temperature (Tᵢ) [° C] | 72 | 65 | 83 | 51 | 32 | 62 | 89 | - |
| Liquid crystallinity | Yes | Yes | Yes | Yes | Yes | Yes | Yes | No |
| Elastic modulus E₁ (Ti - 20° C) [MPa] | 70 | 92 | 92 | 56 | 43 | 114 | 103 | - |
| Elastic modulus E₂ (Ti + 20° C) [MPa] | 1.5 | 5.8 | 0.15 | 25 | 1.6 | 3.1 | 0.08 | - |
| E₁/ E₂ | 46.7 | 15.9 | 613.3 | 2.2 | 26.9 | 36.8 | 1287.5 | - |
| Rupture stress σ₁ (Ti - 20° C) [MPa] | 40 | 29 | 27 | 13 | 32 | 55 | 17 | - |
| Rupture stress σ₂ (Ti + 20° C) [MPa] | 3.2 | 2.5 | 0.7 | 11 | 10 | 1.6 | 0.15 | - |
| σ₁/σ₂ | 12.5 | 11.6 | 38.6 | 1.2 | 3.2 | 34.4 | 113.3 | - |
| Thermoresponsiveness [%] | 40 | 23 | 7 | 5 | 24 | 21 | - | - |

All the liquid crystalline polyurethanes of Examples 1 to 6 had an elastic modulus E₂ of 0.1 MPa or more, with the ratio (E₁/E₂) of the elastic modulus E₁ to the elastic modulus E₂ being 2.2 to 613.3, which satisfies the dynamic condition 1. Thus, the liquid crystalline polyurethanes of Examples 1 to 6 all have at least a predetermined strength (durability) both in the liquid crystalline phase and in the isotropic phase, and an elastic modulus that changes greatly due to the phase transition. The liquid crystalline polyurethanes of Examples 1 to 6 also all have a rupture stress σ₂ of 0.5 MPa or more, with the ratio (σ₁/σ₂) of the rupture stress σ₁ to the rupture stress σ₂ being 1.2 to 38.6, which satisfies the dynamic condition 2. Thus, it was demonstrated that the liquid crystalline polyurethanes of Examples 1 to 6 all have at least a predetermined strength (durability) both in the liquid crystalline phase and in the isotropic phase, and a rupture stress that changes greatly due to the phase transition. Furthermore, in all the liquid crystalline polyurethanes of Examples 1 to 6, a reduction in size (contraction) in the alignment direction due to the phase transition from the liquid crystalline phase to the isotropic phase was observed. In particular, in the liquid crystalline polyurethanes of Examples 1, 2, 5, and 6, the rate of contraction between before and after the phase transition was high, which indicated high thermoresponsiveness. Therefore, it was suggested that the thermoresponsive material containing the liquid crystalline polyurethane of the present invention as a matrix has at least a predetermined strength (durability), and excellent thermoresponsiveness, and is useful as a material having both liquid crystallinity and elasticity.

In contrast to this, the liquid crystalline polyurethanes of Comparative Examples 1 and 2 had insufficient performance for a thermoresponsive material. The liquid crystalline polyurethane of Comparative Example 1 had a smaller elastic modulus E₂, with the elastic modulus ratio (E₁/E₂) being excessive. The reason why the elastic modulus E₂ was reduced may be that the content of trimethylolpropane, which is a component having three or more reactive functional groups, was insufficient. The liquid crystalline polyurethane of Comparative Example 1 also had a smaller rupture stress σ₂, with the rupture stress ratio (σ₁/σ₂) being excessive. The reason why the rupture stress σ₂ was reduced may be that the content of trimethylolpropane, which is a component having three or more reactive functional groups, was insufficient. Therefore, the liquid crystalline polyurethane of Comparative Example 1 did not have at least a predetermined strength when the liquid crystalline polyurethane included the isotropic phase, and therefore, had reduced thermoresponsive when stress was being applied to the liquid crystalline polyurethane. The liquid crystalline polyurethane of Comparative Example 2 had an excessive content of a polyether polyol, which is a component having three or more reactive functional groups, and therefore, the movement of the mesogen groups was inhibited by the cross-linked structure, so that the liquid crystalline phase was less likely to occur. As a result, the liquid crystalline polyurethane of Comparative Example 2 was a substantially unstrechable (substantialy non-thermoresponsive) material.

### INDUSTRIAL APPLICABILITY

Thanks to its excellent thermoresponsiveness, elasticity, elastic modulus change properties, and rupture stress change properties, the thermoresponsive material of the present invention can be used in various applications in addition to a heat control device and clothing product (fiber) that have been described in the above embodiments. For example, the thermoresponsive material of the present invention is applicable to industrial fields such as actuators and filters. Fiber containing the thermoresponsive material of the present invention is also applicable to medical and health care fields such as artificial muscles and catheters.

### REFERENCE SIGNS LIST

- 10: HEAT CONTROL DEVICE
- 14: SUPPORT MEMBER (THERMORESPONSIVE MATERIAL)
- 20: CLOTHING PRODUCT
- 21: FIBER (THERMORESPONSIVE MATERIAL)

## Claims

1. A thermoresponsive material **characterized in that** it comprises:
a liquid crystalline polymer that reversibly transitions between a liquid crystalline phase and an isotropic phase, in response to a change in temperature, the liquid crystalline polymer serving as a matrix, and
E₁/E₂ ≤ 1000 is satisfied,
where E₁ represents the elastic modulus of the matrix when the matrix includes the liquid crystalline phase, and E₂ represents the elastic modulus of the matrix when the matrix includes the isotropic phase.

2. The thermoresponsive material according to claim 1, **characterized in that**
E₂ is 0.1 MPa or more.

3. A thermoresponsive material **characterized in that** it comprises:
a liquid crystalline polymer that reversibly transitions between a liquid crystalline phase and an isotropic phase, in response to a change in temperature, the liquid crystalline polymer serving as a matrix, and
σ₁/σ₂ ≤ 40 is satisfied,
where σ₁ represents the rupture stress of the matrix when the matrix includes the liquid crystalline phase, and σ₂ represents the rupture stress of the matrix when the matrix includes the isotropic phase.

4. The thermoresponsive material according to claim 3, **characterized in that**
σ₂ is 0.5 MPa or more.

5. The thermoresponsive material according to any one of claims 1 to 4, **characterized in that**
a phase transition temperature (Ti) which is a boundary between the liquid crystalline phase and the isotropic phase is higher than or equal to the glass transition temperature (Tg) of the liquid crystalline polymer and lower than or equal to 100°C.

6. The thermoresponsive material according to claim 5, **characterized in that**
a difference between the phase transition temperature (Ti) and the glass transition temperature (Tg) is 20°C or more.

7. The thermoresponsive material according to any one of claims 1 to 6, **characterized in that**
the liquid crystalline polymer is a liquid crystalline polyurethane.

8. The thermoresponsive material according to claim 7, **characterized in that**
the liquid crystalline polyurethane contains a reaction product of a mesogen group-containing compound having an active hydrogen group, an isocyanate compound, an alkylene oxide and/or a styrene oxide, and a cross-linking agent.

9. The thermoresponsive material according to claim 8, **characterized in that**
the cross-linking agent is a polyol having at least three reactive functional groups.

10. The thermoresponsive material according to claim 8 or 9, **characterized in that**
the blended amount of the cross-linking agent is 0.1 to 20 parts by weight with respect to a total of 100 parts by weight of the mesogen group-containing compound, the isocyanate compound, the alkylene oxide and/or the styrene oxide, and the cross-linking agent.

11. The thermoresponsive material according to any one of claims 1 to 10, **characterized in that**
bubbles are dispersed in the matrix.

12. A heat control device **characterized in that** it comprises:
the thermoresponsive material according to any one of claims 1 to 11.

13. A fiber **characterized by** being produced by spinning the thermoresponsive material according to any one of claims 1 to 11.
